## Europäisches Patentamt
## European Patent Office
## Office européen des brevets

(19)

(11) Veröffentlichungsnummer: **0 044 022**
B1

(12)

# EUROPÄISCHE PATENTSCHRIFT

(45) Veröffentlichungstag der Patentschrift:
**15.02.84**

(51) Int. Cl.³: **B 60 N 3/00,** B 60 N 3/02

(21) Anmeldenummer: **81105274.5**

(22) Anmeldetag: **08.07.81**

(54) **Armlehne für Fahrzeuge.**

(30) Priorität: **12.07.80 DE 3026509**

(43) Veröffentlichungstag der Anmeldung:
**20.01.82 Patentblatt 82/3**

(45) Bekanntmachung des Hinweises auf die Patenterteilung:
**15.02.84 Patentblatt 84/7**

(84) Benannte Vertragsstaaten:
**DE FR GB IT SE**

(56) Entgegenhaltungen:
**DE - A - 2 059 197**
**DE - A - 2 645 791**
**DE - B - 1 267 116**
**DE - U - 8 018 809**
**FR - A - 1 359 900**
**US - A - 2 661 052**

(73) Patentinhaber: **Gebr. Happich GmbH,**
**Postfach 10 02 49 Clausenbrücke 1,**
**D-5600 Wuppertal 1 (DE)**

(72) Erfinder: **Cziptschirsch, Kurt, Am Heckendorn 43,**
**D-5600 Wuppertal 2 (DE)**

Armlehne für Fahrzeuge

Die Erfindung bezieht sich auf eine Armlehne für Fahrzeuge, bestehend aus einem Trägerkörper und einem Polsterkörper, die separat gefertigte und durch Zusammenstecken miteinander verbundene Bauteile sind.

Armlehnen für Fahrzeuge bestehen im allgemeinen aus einem Trägerkörper aus relativ formstabilem Material und aus einem diesen einbettenden relativ weichen Polsterkörper aus Kunststoffschaum. Bei den bekannten Armlehnen ist es erforderlich, die Trägerkörper in Schäumformen einzulegen und vor dem Umschäumen exakt auszurichten. Diese Arbeiten sind relativ kostenaufwendig und erfordern viel Personal.

Eine weitere bekannte Armlehne, nach der FR-A-1 359 900, besteht in Übereinstimmung mit dem Gegenstand der vorliegenden Erfindung aus einem Trägerkörper und einem Polsterkörper, die separat gefertigte und durch Zusammenstecken miteinander verbundene Bauteile sind. Das Zusammenstecken der Bauteile wird bei dieser bekannten Armlehne dadurch ermöglicht, dass der Trägerkörper Öffnungen aufweist, in die elastische Klammern, die am Polsterkörper zum Beispiel durch Kleben befestigt sind, einschnappen können. Die Herstellung der elastischen Klammern und ihre Anbringung an dem Polsterkörper verursacht zusätzliche Arbeitsgänge und Materialkosten, wodurch die Armlehne insgesamt verteuert wird. Auch erscheint die Verbindung zwischen dem Trägerkörper und dem Polsterkörper bei dieser bekannten Armlehne nicht besonders zuverlässig zu sein.

Es ist Aufgabe der Erfindung, den konstruktiven Aufbau einer Armlehne der eingangs genannten Art und deren Herstellung zu vereinfachen.

Gelöst wird diese Aufgabe erfindungsgemäss dadurch, dass der Polsterkörper mit einer Einschiebenut ausgebildet ist, in die der Trägerkörper mit Randbereichen eingreift, um eine Verbindung der Armlehnenteile zu bewirken.

Die besonderen Vorteile der Erfindung sind darin zu sehen, dass jeder Bestandteil der Armlehne nach optimalen Fertigungsmöglichkeiten, also ohne Beeinflussung durch den anderen Bestandteil, gefertigt werden kann. Da das Einlegen des Trägerkörpers in eine Schäumform entfällt, ist nunmehr eine zumindest weitgehend vollautomatische Herstellung der Armlehnenteile ermöglicht. Das Zusammenstecken der Armlehnenteile kann, da keine Hilfsmittel, wie Klammern od.dgl. erforderlich sind, schnell und einfach, insbesondere aber auch kostengünstig durchgeführt werden, zumal kein besonders geschultes Personal benötigt wird. Durch das Eingreifen von Randbereichen des Trägerkörpers in die Einschiebenut des Polsterkörpers ist auch eine zuverlässige Verbindung der Armlehnenteile gewährleistet.

Zweckmässigerweise kann der Trägerkörper als Kunststoffspritzgussteil und der Polsterkörper als Kunststoffschaumteil ausgebildet sein. Auch kann in Ausgestaltung der Erfindung vorgesehen sein, dass der Polsterkörper den Trägerkörper in Einbaulage nach oben überragt und auch über dessen Seitenwandungen vorsteht.

Eine bevorzugte Ausgestaltung der Erfindung besteht darin, dass der Trägerkörper eine schalenförmige Ausbildung mit divergierenden Wandungen besitzt, wobei die zur Karosserie gerichtete Rückseite offen ist und die dem Polsterkörper zugewandte obere Wandung aus einem einwärts abgewinkelten Flansch besteht, welcher, in Draufsicht gesehen, eine etwa U-förmige Gestaltung aufweist und in die Einschiebenut des Polsterkörpers eingreift. Diese Massnahmen sind in verschiedener Hinsicht von Vorteil und Bedeutung. Dabei muss man davon ausgehen, dass der Trägerkörper der herkömmlichen Armlehnen mit einer relativ dünnen Polsterschicht versehen ist, die lediglich einen weichen, dem Aussehen förderlichen Effekt erbringt. Jedoch ist die Polsterschicht bei einem unfallbedingten Aufprall eines Fahrzeuginsassen praktisch unwirksam, da sie keine merkliche Energiemenge absorbieren kann. Auch die Trägerkörper der bekannten Armlehnen (vgl. beispielsweise DE-OS 26 45 791) sind nicht in befriedigender Weise für eine Energieabsorption geeignet. Beim Aufprall eines Fahrzeuginsassen auf die erfindungsgemässe Armlehne im Falle eines Unfalles verteilt der Polsterkörper hingegen die Aufprallast, während die Energie hauptsächlich durch das Zusammendrücken des Trägerkörpers absorbiert wird. Ein Zusammendrücken des Trägerkörpers ist durch dessen schalenförmige Ausbildung mit divergierenden Wandungen ermöglicht worden. Die erfindungsgemässe Armlehne ist damit erhöht sicherheitsgerecht. Der nach einwärts gerichtete Flansch stellt keinen Ansatzpunkt dar, der bei einem Aufprall eine Verletzungsgefahr begründen könnte, bietet aber aufgrund seiner Ausrichtung den Vorteil, dass der Polsterkörper in montiertem Zustand der Armlehne nicht vom Trägerkörper abgezogen werden kann.

Ein Eindrücken des Polsterkörpers in das Innere des Trägerkörpers kann wirksam verhindert werden durch einen am Trägerkörpers innenseitig angeformten Steg, der parallel zum abgewinkelten Flansch verläuft und den Polsterkörper untergreift.

Weiterhin können an dem abgewinkelten Flansch des Trägerkörpers Stege angeformt sein, die in Steckaufnahmen des Polsterkörper eingreifen. Diese Massnahmen ist besonders bei Armlehnen von Vorteil, die mit einem Durchgriff ausgebildet sind, weil hier die Gefahr des Abziehens des Polsterkörpers erhöht besteht. Die Steckaufnahmen sind in Verlängerung der Einschiebenut ausgebildet und können gegebenenfalls den Polsterkörper durchsetzen.

Der Trägerkörper kann in weiterer Ausgestaltung der Erfindung hülsenförmige Einziehungen aufweisen, die jeweils einen mit der Rückseite des Trägerkörpers abschliessenden, mit einer Durchlassöffnung für eine Befestigungsschraube versehenen Boden besitzen, wobei sich jede hülsenförmige Einziehung zum Boden hin über zwei oder mehrere in die Umfangswandung eingebrachte, als Sollbruchstelle ausgebildete Stufen verjüngt. Auf diese Weise kann die Armlehne problemlos befestigt werden und dennoch bei einer Aufprallbelastung zusammenbrechen.

Ein Ausführungsbeispiel der Erfindung wird nachfolgend anhand der Zeichnung näher erläutert. Es zeigen

Fig. 1 eine Armlehne in schaubildlicher Ansicht und

Fig. 2 einen Schnitt II–II nach Fig. 1.

Die Armlehne besitzt einen zweiteiligen Aufbau und besteht aus einem unteren Trägerkörper 1 und einem oberen Polsterkörper 2. Trägerkörper 1 und Polsterkörper 2 sind durch Zusammenstekken miteinander verbunden.

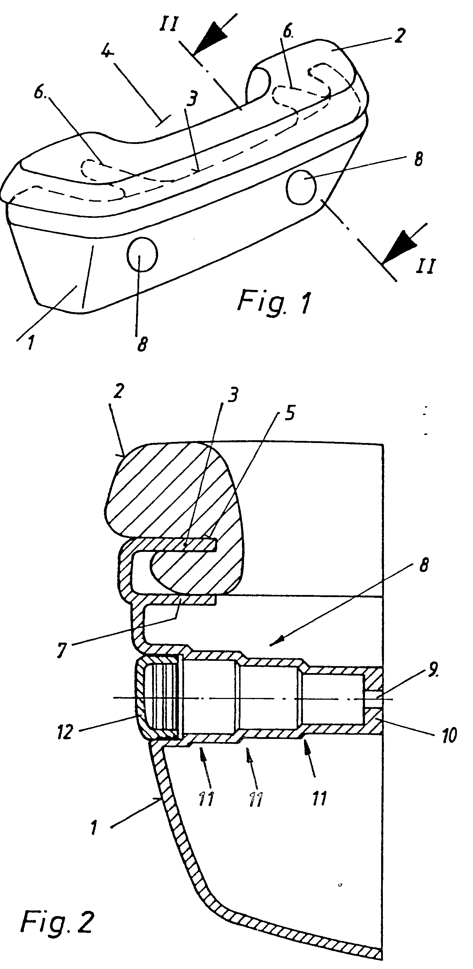

Der Trägerkörper 1 ist bevorzugt als Kunststoffspritzgussteil ausgebildet und besitzt eine schalenförmige Gestaltung mit divergierenden Wandungen. An der der Karosseriewand zugewandten Anlageseite ist der Trägerkörper 1 offen ausgebildet. Auch nach oben ist der Trägerkörper 1 im wesentlichen offen. Hier ist lediglich eine Teilwandung vorgesehen, die als nach innen abgewinkelter Flansch 3 ausgebildet ist. Der Flansch 3 besitzt, wie die gestrichelte Linie in Fig. 1 erkennen lässt, eine in Draufsicht gesehen U-förmige Gestaltung, wobei der Steg eine wesentlich grössere Länge als die Seitenschenkel besitzt.

Der Polsterkörper 2 besitzt im dargestellten Ausführungsbeispiel in Draufsicht gesehen ebenfalls eine U-förmige Gestaltung, so dass ein Durchgriff 4 ausgebildet ist. Im Querschnitt besitzt der Polsterkörper 2 eine angenähert kreisförmige oder wulstförmige Ausbildung mit einer umfangsseitigen Einschiebenut 5, in die der Flansch 3 des Trägerkörpers 1 eingreift. Wie die Zeichnungen zeigen, überragt der Polsterkörper 2 den Trägerkörper 1 nach oben und in geringerem Masse auch frontseitig.

Trägerkörper 1 und Polsterkörper 2 sind separat gefertigte Bauteile, die durch blosses Zusammenstecken miteinander verbunden sind. Bei der Montage wird der Polsterkörper 2 an den Trägerkörper 1 von dessen offener Rückseite her herangeführt und die Einschiebenut 5 über den Flansch 3 geschoben. Nach dem Befestigen der Armlehne an eine Karosseriewand kann der Polsterkörper 2 nicht mehr vom Trägerkörper 1 abgezogen werden.

Bei einer Armlehne, die, wie dargestellt, mit einem Durchgriff 4 ausgebildet ist, ist es zweckmässig, den Polsterkörper 2 gegen ein Hochziehen zu sichern. Dies erfolgt beim Ausführungsbeispiel durch am Flansch 3 in dessen Verlängerung angeformte Stege 6, die in entsprechende Steckaufnahmen des Polsterkörpers eingreifen.

Ferner ist es zweckmässig, den Polsterkörper 2 unterseitig abzustützen. Zu diesem Zweck ist innenseitig des Trägerkörpers 1 ein Stützsteg 7 angeformt, der sich im Abstand vom und parallel zum Flansch 3 erstreckt.

Um die Armlehne problemlos mit Schrauben an einer Karosseriewand befestigen zu können, weist der Trägerkörper 1 zwei hülsenförmige Einziehungen 8 auf, die jeweils einen mit der Rückseite des Trägerkörpers 1 abschliessenden, mit einer Durchlassöffnung 9 versehenen Boden 10 besitzt. Die durch die Durchlassöffnungen 9 geführten Befestigungsschrauben können sich mit ihrem Kopf auf dem Boden 10 abstützen. Jede hülsenförmige Einziehung 8 ist zum Boden 10 hin über mehrere in die Umfangswandung eingebrachte, als Sollbruchstellen ausgebildete Stufe 11 verjüngt. Die Einziehungen 8 können nach der Montage der Armlehne mittels Stopfen 12 verschlossen werden.

Aufgrund der beschriebenen Ausbildung kann die Armlehne, die geeignet ist, alle anwendungstechnisch auftretenden Kräfte aufzunehmen, beim Auftreten einer grösseren als der konstruktiv festgelegten Kraft in eine flachere Form übergehen.

**Patentansprüche**

1. Armlehne für Fahrzeuge, bestehend aus einem Trägerkörper (1) und einem Polsterkörper (2), die separat gefertigte und durch Zusammenstecken miteinander verbundene Bauteile sind, dadurch gekennzeichnet, dass der Polsterkörper (2) mit einer Einschiebenut (5) ausgebildet ist, in die der Trägerkörper (1) mit Randbereichen eingreift, um eine Verbindung der Armlehnenteile zu bewirken.

2. Armlehne nach Patentanspruch 1, dadurch gekennzeichnet, dass der Trägerkörper (1) als Kunststoffspritzgussteil und der Polsterkörper (2) als Kunststoffschaumteil ausgebildet ist.

3. Armlehne nach Patentanspruch 1 oder 2, dadurch gekennzeichnet, dass der Polsterkörper (2) den Trägerkörper (1) in Einbaulage nach oben überragt und auch über dessen Seitenwandungen vorsteht.

4. Armlehne nach einem oder mehreren der Patentansprüche 1 bis 3, dadurch gekennzeichnet, dass der Trägerkörper (1) eine schalenförmige Ausbildung mit divergierenden Wandungen besitzt, wobei die zur Karosserie gerichtete Rückseite offen ist und die dem Polsterkörper (2) zugewandte obere Wandung aus einem einwärts abgewinkelten Flansch (3) besteht, welcher, in Draufsicht gesehen, eine etwa U-förmige Gestaltung aufweist und in die Einschubnut (5) des Polsterkörpers (2) eingreift.

5. Armlehne nach einem oder mehreren der Patentansprüche 1 bis 4, gekennzeichnet durch einen am Trägerkörper (1) innenseitig angeformten Stützsteg (7), der parallel zum abgewinkelten Flansch (3) verläuft und den Polsterkörper (2) untergreift.

6. Armlehne nach einem oder mehreren der Patentansprüche 1 bis 5, gekennzeichnet durch an den abgewinkelten Flansch (3) des Trägerkörpers (1) angeformte Stege (6), die in Steckaufnahmen des Polsterkörpers (2) eingreifen.

7. Armlehne nach einem oder mehreren der Patentansprüche 1 bis 6, dadurch gekennzeichnet, dass der Trägerkörper (1) hülsenförmige Einziehungen (8) aufweist, die jeweils einen mit der Rückseite des Trägerkörpers (1) abschliessenden, mit einer Durchlassöffnung (9) für eine Befestigungsschraube versehenen Boden (10) besitzen, wobei sich jede hülsenförmige Einziehung (8) zum Boden (10) hin über zwei oder mehrere in die Umfangswandung eingebrachte, als Sollbruchstellen ausgebildete Stufen (11) verjüngt.

**Revendications**

1. Accoudoir pour véhicules, se composant d'une armature portante (1) et d'une garniture (2) qui sont fabriquées séparément et qui sont des éléments reliés l'un à l'autre par enboîtement, caractérisé en ce que la garniture (2) est conformée avec une rainure (5) d'insertion dans laquelle l'armature portante (1) s'insère par des rebords périphériques pour réaliser un assemblage des parties de l'accoudoir.

2. Accoudoir selon la revendication 1, caractérisé en ce que l'armature portante (1) est réalisée sous la forme d'une pièce en matière plastique moulée par injection et en ce que la garniture (2) est réalisé sous la forme d'une pièce en mousse plastique.

3. Accoudoir selon une des revendications 1 ou 2, caractérisé en ce que la garniture (2) en position installée dépasse au delà de l'armature portante (1) vers le haut et aussi au delà des parois latérales de celle-ci.

4. Accoudoir selon une ou plusieurs des revendications 1 à 3, caractérisé en ce que l'armature portante (1) présente une configuration en forme de coquille avec des parois divergentes, son côté postérieur tourné vers la carroserie étant ouvert, tandis que sa paroi supérieure tournée vers la garniture (2) consiste en une aile (3) inclinée vers l'intérieur et présentant, vue en plan, une configuration proche d'un U, cette aile s'insérant dans la rainure (5) de la garniture.

5. Accoudoir selon une ou plusieurs des revendications 1 à 4, caractérisé par une nervure d'appui (7) formée sur le côté interne de l'armature portante (1), cetter nervure (7) s'étentdant parallèlement à l'aile inclinée (3) et s'engangeant sous la garniture (2).

6. Accoudoir selon une ou plusieurs des revendications 1 à 5, caractérisé par des branches (6) ménagées sur l'aile inclinée (3) de l'armature portante (1) qui s'engagent dans des fentes de la garniture (2).

7. Accoudoir selon une ou plusieurs des revendications 1 à 6, caractérisé en ce que l'armature portante (1) présente des renforcements (8) en forme de douilles qui possèdent chacun un fond (10) se raccordant au côté postérieur de l'armature portante (1) et percé d'un orifice de passage (9) pour une vis de fixation, tandis que chaque renfoncement (8) en forme de douille se rétrécit en direction du fond (10) par des gradins (11) au nombre de deux ou plus, ménagés dans la paroi périphérique et conformés pour constituer des points d'amorçage de rupture.

**Claims**

1. An arm-rest for a vehicle, the rest comprising a support (1) and a pad (2) which are independently manufactured components subsequently joined by fitting the one into the other, characterized in that the pad (2) is provided with a slide-in slot (5) which for the purpose of joining said components of the arm-rest is engaged by edge portions of the support (1).

2. An arm-rest according to claim 1, characterized in that the support (1) is an injection-moulded plastics component and the pad (2) a foamed plastics component.

3. An arm-rest accroding to claim 1 or to claim 2, characterized in that the pad (2), after said components have been joined, is positioned at the top of the support (1) and also protrudes beyond the side walls thereof.

.4. An arm-rest according to any one or more of the claims 1 to 3, characterized in that the walls of the support (1) which is disk-shaped diverge, that the support's rear which in the rest's mounted state faces the vehicle body is open, and in that its top facing the pad (2) is an angularly bent inwardly directed flange (3), which, in plan view, is substantially U-shaped and engages the slide-in slot (5) of the pad (2).

5. An arm-rest according to any one or more of the claims 1 to 4, characterized by a steadying web (7) which is formed integrally with the support (1), extends from the internal face thereof parallel with the angularly bent flange (3) and serves to support the pad (2).

6. An arm-rest according to any one or more of the claims 1 to 5, characterized by fillets (6) integrally formed with the angularly bent flange (3) of the support (1) and arranged to engage plug-in recesses in the pad (2).

7. An arm-rest according to any one or more of the claims 1 to 6, characterized in that the support (1) includes sleeve-shaped draw-in boxes (8) each of which is provided with a bottom (10) terminating flush with the rear of the support (1) and having a through-hole (9) for the passage therethrough of a fastening screw, and in that each sleeve-shaped draw-in box (8) is diametrically reduced towards its bottom (10) by means of two or more steps (11) formed in its peripheral wall and constructed to serve as predetermined spots of fracture.

Fig. 1

Fig. 2